(19) **Europäisches Patentamt**
**European Patent Office**
**Office européen des brevets**

(11) **EP 4 707 863 A1**

(12) # EUROPEAN PATENT APPLICATION

(43) Date of publication:
**11.03.2026 Bulletin 2026/11**

(21) Application number: **24199357.5**

(22) Date of filing: **09.09.2024**

(51) International Patent Classification (IPC):
***G01S 15/52*** *(2006.01)* ***G01S 15/87*** *(2006.01)*

(52) Cooperative Patent Classification (CPC):
**G01S 15/876; G01S 15/526**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Fraunhofer-Gesellschaft zur Förderung
der angewandten Forschung e.V.
80686 München (DE)**

(72) Inventors:
• **LAWRENCE, Jeremy**
 **91058 Erlangen (DE)**
• **PETERS, Nils**
 **91058 Erlangen (DE)**
• **TUNA, Cagdas**
 **91058 Erlangen (DE)**
• **WALTHER, Andreas**
 **91058 Erlangen (DE)**

(74) Representative: **Schairer, Oliver Michael et al
Schoppe, Zimmermann, Stöckeler
Zinkler, Schenk & Partner mbB
Patentanwälte
Radlkoferstraße 2
81373 München (DE)**

(54) **APPARATUS AND METHOD FOR ACOUSTIC POSITION ESTIMATION OF A SILENT LISTENER**

(57)    An apparatus for acoustic localization of a living being or of a moving object according to an embodiment is provided. The apparatus comprises a response determiner (110) configured for determining first response information for an environment for a first point-in-time or for a first time period when the living being or the moving object is present in the environment; and configured for determining second response information for the environment for a second point-in-time or for a second time period, being different from the first point-in-time or from the first time period, when the living being or the moving object is also present in the environment. Moreover, the apparatus comprises a response difference determiner (120) configured for determining response difference information indicating differences between the second response information and the first response information. Furthermore, the apparatus comprises a location determiner (130) configured for determining a location of the living being or of the moving object in the environment depending on the response difference information.

Fig. 1

EP 4 707 863 A1

**Description**

The present invention relates to an apparatus and a method for position/location estimation and, in particular, to an apparatus and a method for acoustic position estimation of a silent listener.

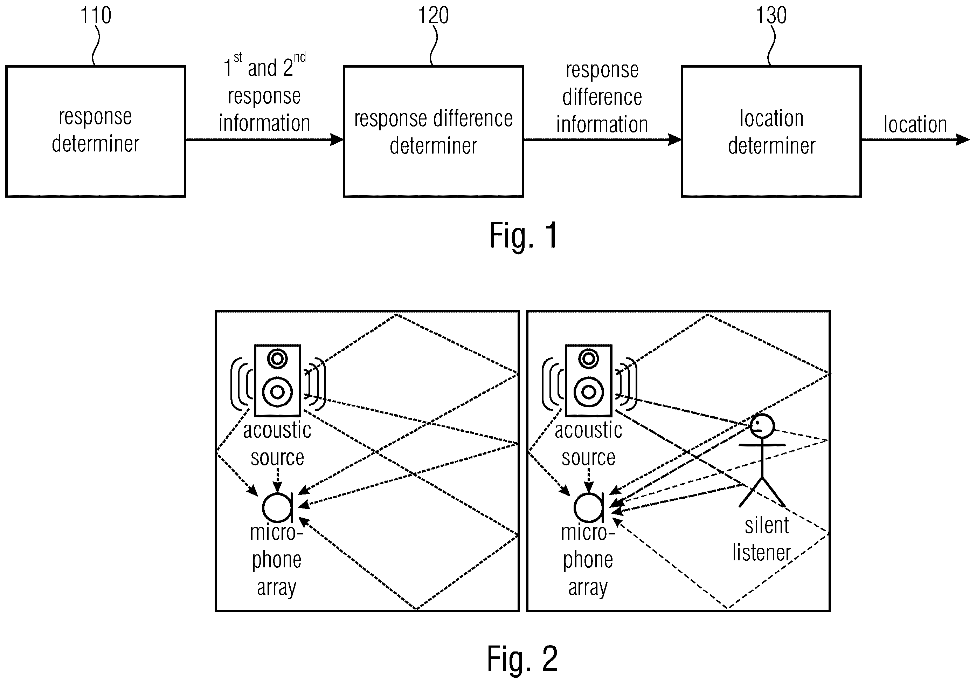

Extensive research has been dedicated to the localization of objects of interest that actively emit sound (e.g., [1] [2]). Naturally, these methods fail when the objects of interest are silent. In contexts such as tracked rendering, it is essential to have knowledge of the position of a typically silent listener, necessitating the use of tracking devices such as e.g. cameras. However, the sound emitted by the tracked rendering system itself could theoretically be utilized for tracking, removing the need for cameras. The fundamental concept is that a room's room impulse response (RIR) is altered by the presence of a silent listener, since they obstruct certain acoustic paths and introduce new ones, as illustrated in Fig. 1. In particular, Fig. 2 illustrates an RIR change due to presence of silent listener. Therefore, the RIR contains information regarding the listener's position. Despite the potential advantages of RIR-based listener localization, research on this subject remains limited.

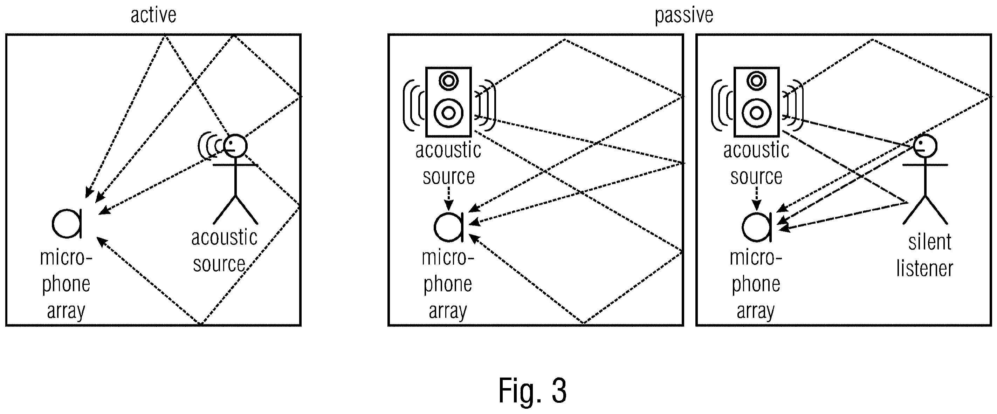

Fig. 3 illustrates the different concepts. In Fig. 3, left, an active listener, which emits sound waves is depicted. By localizing the origin of the sound waves emitted by the listener, the listener can be located. The two illustrations in Fig. 3, depict a situation, where the listener is not present in the room, which results in the empty room's IR compared to a situation, where the listener is silent, but present in the room, which results in a slightly altered RIR. To isolate the change in the RIR caused by a silent listener, these two RIRs may be subtracted from each other.

The authors of [3] estimated IRs of a single room with and without a person present using ultrasonic 19 kHz-32 kHz sine sweeps. Subsequently, the RIR change was isolated by subtracting the empty room's IR from the room's IR with the listener present. Given knowledge of the loudspeaker and microphone positions, the RIR change can be spatially mapped, resulting in ellipses that represent potential listener locations. This information was subsequently input into a convolutional neural network to provide distance information to a camera utilized for human pose detection.

In [4] a 7-microphone linear array was used in conjunction with 1 kHz Gaussian modulated pulses emitted by a loudspeaker to localize a silent object and a human. Here, the windowed steered response power of the RIR change was computed and spatially mapped, resulting in a heatmap of potential locations. Localization was subsequently performed by identifying the point of maximum power on the heatmap. Given that the microphone spacing was selected to optimize the beamformer's directivity at 1 kHz, the efficacy of this method for wideband sources remains uncertain.

The main drawback of utilizing the RIR change is the necessity of the empty room's IR: Any slight alteration in the room, such as variations in air temperature or pressure, or subtle changes in the arrangement of furniture, may cause erroneous peaks in the RIR change. As a consequence, the empty room's IR must be repeatedly re-estimated. The disadvantages of this approach have been further confirmed in [5], where the RIR between one loudspeaker and up to ten distributed microphones was estimated using 20 Hz - 24 kHz sine sweeps and music signals. Here, the RIR change was spatially mapped for each microphone and the resulting heatmaps multiplied together. The resulting position estimates, being the maxima on each combined heatmap, had average errors of at least 1.4 m and 2.2 m for RIRs derived from sweeps and music, respectively.

To allow for more accurate localization, the authors of [5] also evaluated the performance of data-driven algorithms such as k-nearest neighbors, linear regression and the deep convolutional neural network VGGish. Machine-learning and deep-learning models are trained on captured RIRs for many listener positions. The utilized data were up to 5,000 10-channel sine sweep-derived RIRs and up to 2,000 10-channel music-derived RIRs captured across three rooms with five humans positioned at various locations, one at a time. The best performance was achieved by VGGish, allowing for localization with approximately 30 cm of error for both sine sweep- and music-derived RIRs. Despite the promising performance, the large quantity of training data required makes this approach impractical for consumer applications, since the required RIRs for training must be room and person-specific. Furthermore, minor alterations to the room's furniture significantly affect localization performance, resulting in errors above 1 m.

The object of the present invention is to provide improved concepts for acoustic localization. The object of the present invention is solved by an apparatus according to claim 1, by a method according to claim 20 and by a computer program according to claim 21.

An apparatus for acoustic localization of a living being or of a moving object according to an embodiment is provided. The apparatus comprises a response determiner configured for determining first response information for an environment for a first point-in-time or for a first time period when the living being or the moving object is present in the environment; and configured for determining second response information for the environment for a second point-in-time or for a second time period, being different from the first point-in-time or from the first time period, when the living being or the moving object is also present in the environment. Moreover, the apparatus comprises a response difference determiner configured for determining response difference information indicating differences between the second response information and the first response information. Furthermore, the apparatus comprises a location determiner configured for determining a location of the living being or of the moving object in the environment depending on the response difference information.

Moreover, a method for acoustic localization of a living being or of a moving object according to an embodiment is provided. The apparatus comprises:

- Determining first response information for an environment for a first point-in-time or for a first time period when the living being or the moving object is present in the environment; and configured for determining second response information for the environment for a second point-in-time or for a second time period, being different from the first point-in-time or from the first time period, when the living being or the moving object is also present in the environment.

- Determining response difference information indicating differences between the second response information and the first response information. And:

- Determining a location of the living being or of the moving object in the environment depending on the response difference information.

Furthermore, a computer program for implementing the above-described method according to an embodiment is provided, when the computer program is executed on a computer or signal processor.

Embodiments provide a new approach to localizing silent listeners, termed passive acoustic localization. According to an embodiment, by continuously estimating a room's impulse response using a loudspeaker emitting a known signal and a microphone array, subtle variations in the room impulse response over time can be detected, which are induced by the listener's movements.

In embodiments, the new, passive acoustic localization approach requires no empty RIR and no training data: Rather than computing the difference between an empty room's IR and a specific IR with an existing listener $h^c(t)$, instead, the difference between successive impulse responses captured while the listener is present in the room may, e.g., be computed.

According to an embodiment, object localization and tracking may, e.g., be conducted based on a difference between successive impulse responses of an acoustic environment.

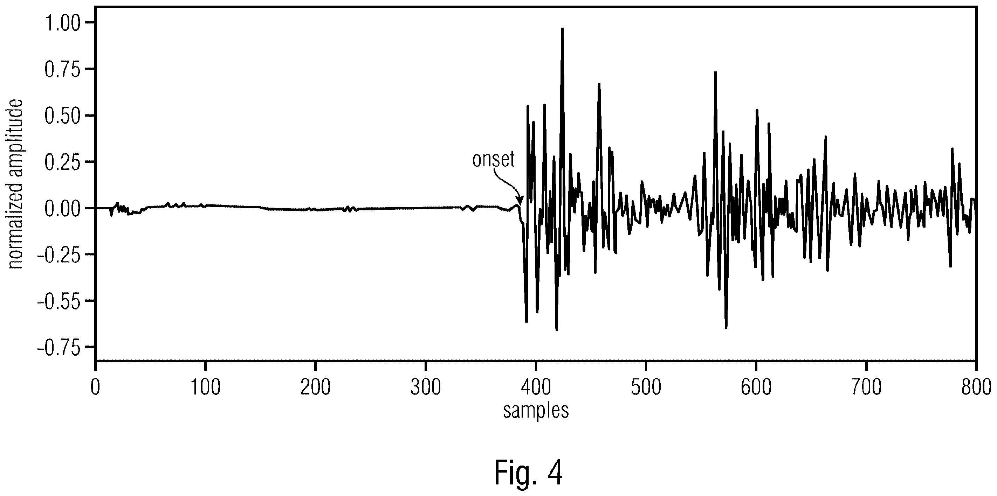

An underlying idea of some embodiments is that any listener will invariably exhibit movement, albeit minimal due to, for example, breathing or cardiac activity. As other elements in the room generally remain static or only undergo very gradual changes over time, the difference between successive impulse responses, which may, e.g., be referred to as differential RIR, will employ a similar onset as the one depicted in Fig. 4. Although the detection of higher order reflections within a differential RIR may also be of importance for localization, embodiments focus on the detection of the onset, e.g., the first reflection from the listener.

In the following, embodiments of the present invention are described in more detail with reference to the figures, in which:

Fig. 1    is an apparatus according to an embodiment,

Fig. 2    illustrates an RIR change due to presence of silent listener.

Fig. 3    depicts in its left illustration, an active listener, which emits sound waves, and depicts in its two right illustrations a difference between an empty room and a room with a silent listener.

Fig. 4    illustrates an example of $h^c(t)$ with clear person-induced onset.

Fig. 5    illustrates two ellipses and one of their intersection points according to an embodiment.

Fig. 6    illustrates an embodiment, where audio signals are reproduced, wherein a MIMO system/apparatus allows to detect an onset in the differences between successive impulse responses or successive transfer functions, and conducts localization using the detected onset.

Fig. 7    illustrates an exemplary impulse response determined by an apparatus according to an embodiment.

Fig. 8    illustrates a top view of a loudspeaker (to scale) with upwards-facing microphones.

Fig. 9    illustrates two rooms, namely a first room being a living room (left), and a second room being an empty space (right).

Fig. 10   illustrates an example of location determination results of one loudspeaker-microphone array system for a room A (living room), wherein the different results allow to determine a pose of a listener.

Fig. 11    illustrates another example of location determination results of another loudspeaker-microphone array system for the room A (living room), wherein the different results allow to determine a pose of a listener.

Fig. 12    illustrates examples of location determination results of two loudspeaker-microphone array systems for the room A (living room).

Fig. 13    illustrates an example of location determination results of one loudspeaker-microphone array system for a room B (empty space), wherein the different results allow to determine a pose of a listener.

Fig. 14    illustrates another example of location determination results of another loudspeaker-microphone array system for the room B (empty space), wherein the different results allow to determine a pose of a listener.

Fig. 15    illustrates examples of location determination results of two loudspeaker-microphone array systems for the room B (empty space).

Fig. 1 illustrates an apparatus for acoustic localization of a living being or of a moving object according to an embodiment.

The apparatus comprises a response determiner 110 configured for determining first response information for an environment for a first point-in-time or for a first time period when the living being or the moving object is present in the environment; and configured for determining second response information for the environment for a second point-in-time or for a second time period, being different from the first point-in-time or from the first time period, when the living being or the moving object is also present in the environment.

Moreover, the apparatus comprises a response difference determiner 120 configured for determining response difference information indicating differences between the second response information and the first response information.

Furthermore, the apparatus comprises a location determiner 130 configured for determining a location of the living being or of the moving object in the environment depending on the response difference information.

According to an embodiment, the response determiner 110 may, e.g., be configured for determining the first response information and the second response information depending on one or more loudspeaker signals reproduced by one or more loudspeakers in the environment and depending on one or more microphone signals of one or more microphones recording sound waves in the environment when the one or more loudspeaker signals are reproduced by the one or more loudspeakers.

In an embodiment, the location determiner 130 may, e.g., be configured to determine an onset time indicating a time of an onset depending on the response difference information. The location determiner 130 may, e.g., be configured to determine the location of the living being or of the moving object depending on the onset time.

According to an embodiment, the response determiner 110 may, e.g., be configured to determine the first response information and the second response information, such that the first response information and the second response information comprises information on two or more impulse responses or on two or more transfer functions, which depend on at least one of the one or more loudspeaker signals, and which depend on at least one of the one or more microphone signals. The response difference determiner 120 may, e.g., be configured to determine the response difference information, such that the response difference information comprises information on two or more difference functions; wherein each of the two or more difference functions indicate a difference between one of the two or more impulse responses of the second response information and one of the two or more first impulse responses of the first response information for a same loudspeaker-microphone path of the one or more loudspeakers and of the one or more microphones, or wherein each of the two or more difference functions indicate a difference between one of the two or more transfer functions of the second response information and one of the two or more transfer functions of the first response information for a same loudspeaker-microphone path of the one or more loudspeakers and of the one or more microphones.

According to an embodiment, an impulse response may, e.g., refer to a (e.g., reflected) sound wave path from a loudspeaker via the living being or the moving object, where sound waves are reflected, to a microphone, wherein the loudspeaker and microphone are located inside a room. A loudspeaker-microphone path may, e.g., be such a sound wave path from a loudspeaker via the living being or the moving object to the microphone.

In other embodiments, an impulse response may, e.g., refer to a sound wave path from a loudspeaker via the living being or the moving object, where sound waves are reflected to a microphone, wherein the loudspeaker and microphone are located outside a room.

In an embodiment, the location determiner 130 may, e.g., be configured to determine the onset time

- by determining, for each time instance of a plurality of time instances, a power value or an energy value or a magnitude value or an amplitude value for each of a plurality of directions, depending on the two or more difference functions,

- by choosing for said time instance a maximum power or a maximum energy or a maximum magnitude or a maximum amplitude among the plurality of directions, and

- by choosing one of the plurality of time instances as the onset time having a maximum power or maximum energy or maximum magnitude or maximum amplitude being greater than a threshold value.

According to an embodiment, the location determiner 130 may, e.g., be configured to determine the power value or the energy value for each of the plurality of directions for each of the plurality of time instances using beamforming.

In an embodiment, the location determiner 130 may, e.g., be configured to determine the power value or the energy value for each of the plurality of directions for each of the plurality of time instances using delay-and-sum beamforming or using filter-and-sum beamforming. Or, the location determiner 130 may, e.g., be configured to determine the location of the living being or of the moving object using a steered-response power algorithm.

According to an embodiment, the one or more microphones comprise at least two microphones. The apparatus may, e.g., be configured to determine the maximum power for each of the plurality of time instances depending on

$$P(t, \varphi) = \left| \frac{1}{N} \cdot \sum_{i=0}^{N-1} h_i(t - \tau_i(\varphi)) \right|^2$$

$$\hat{P}(t) = \max_{\varphi} P(t, \varphi)$$

or depending on

$$P(t, \varphi) = \left| \frac{1}{N} \cdot \sum_{i=0}^{N-1} w_i(t) \cdot h_i(t - \tau_i(\varphi)) \right|^2$$

$$\hat{P}(t) = \max_{\varphi} P(t, \varphi)$$

Or, the apparatus may, e.g., be configured to determine a maximum value for each of the plurality of time instances depending on

$$Y(t, \varphi) = \frac{1}{N} \cdot \sum_{i=0}^{N-1} h_i(t - \tau_i(\varphi))$$

$$\hat{Y}(t) = \max_{\varphi} \{ |Y(t, \varphi)|^n \}$$

or depending on

$$Y(t, \varphi) = \frac{1}{N} \cdot \sum_{i=0}^{N-1} w_i(t) \cdot h_i(t - \tau_i(\varphi))$$

$$\hat{Y}(t) = \max_{\varphi}\{|Y(t,\varphi)|^n\}$$

wherein $t$ indicates one of the plurality of time instances,

wherein $\varphi$ is an angle indicating one of the plurality of directions,

wherein $\tau_i(\varphi)$ indicates a $\varphi$-dependent time lag for an $i$-th microphone of the at least two microphones,

wherein $N$ indicates a number of the at least two microphones,

wherein $h_i$ indicates a differential impulse response for the $i$-th microphone,

wherein $w_i(t)$ indicates a weight for time instance $t$ for the $i$-th microphone,

wherein $P(t, \varphi)$ indicates the power value for $\varphi$ for a time instance $t$,

wherein $\hat{P}(t)$ indicates the maximum power for the time instance $t$ among the plurality of directions,

wherein $Y(t, \varphi)$ indicates a result of the filter-and-sum beamforming or of the delay-and-sum beamforming for $\varphi$ for a time instance $t$,

wherein $\hat{Y}(t)$ indicates the maximum value for the time instance $t$ among the plurality of directions,

wherein n indicates a real number.

In an embodiment, the location determiner 130 may, e.g., be configured to determine a direction from the at least one of the one or more microphones to the location of the living being or of the moving object depending on that direction of the plurality of directions for which the power value or the energy value or the magnitude value or the amplitude value may, e.g., be the maximum power or may, e.g., be the maximum energy or may, e.g., be the maximum magnitude or may, e.g., be the maximum amplitude.

According to an embodiment, the location determiner 130 may, e.g., be configured to determine a direction $\hat{\varphi}$ from the at least one of the one or more microphones to the location of the living being or of the moving object depending on

$$\hat{\varphi} = \operatorname*{argmax}_{\varphi} \int_{t0}^{t1} P(t,\varphi)\, dt$$

wherein $P(t, \varphi)$ indicates the power value for $\varphi$ for a time instance $t$,

wherein $t_0$ and $t_1$ are chosen such that they define an interval of predefined size around the onset time $t_{ons}$ that has been determined with $t_0 \leq t_{ons} \leq t_1$.

Or, wherein the location determiner 130 may, e.g., be configured to determine a direction $\hat{\varphi}$ from the at least one of the one or more microphones to the location of the living being or of the moving object depending on

$$\hat{\varphi} = \operatorname*{argmax}_{\varphi} \int_{t_0}^{t_1} |Y(t,\varphi)|^2\, dt$$

wherein $Y(t, \varphi)$ indicates a result value of a beamforming algorithm or of a steered-response power algorithm for $\varphi$ for a time instance $t$,

wherein $t_0$ and $t_1$ are chosen such that they define an interval of predefined size around the onset time $t_{ons}$ that has been determined with $t_0 \leq t_{ons} \leq t_1$.

In an embodiment, to obtain a refinement $\hat{t}_{ons}$ of the onset time, the location determiner 130 may, e.g., be configured to refine the onset time that has been determined depending on

$$\hat{t}_{ons} = \operatorname*{argmax}_{t}\{P(t,\hat{\varphi})\} \quad subject\ to\ \ t_0 \leq t \leq t_1$$

wherein $P(t, \hat{\varphi})$ indicates the power value for $\hat{\varphi}$ for a time instance $t$,

wherein $t_0$ and $t_1$ are chosen such that they define an interval of predefined size around the onset time $t_{ons}$ that has been determined with $t_0 \leq t_{ons} \leq t_1$.

Or, wherein, to obtain a refinement $\hat{t}_{ons}$ of the onset time, the location determiner 130 may, e.g., be configured to refine the onset time that has been determined depending on

$$\hat{t}_{\text{ons}} = \underset{t}{\text{argmax}}\{|Y(t, \hat{\varphi})|\} \quad \text{subject to} \quad t_0 \leq t \leq t_1$$

wherein $Y(t, \hat{\varphi})$ indicates a result value of a beamforming algorithm or of a steered-response power algorithm for $\varphi$ for a time instance $t$,

wherein $t_0$ and $t_1$ are chosen such that they define an interval of predefined size around the onset time $t_{ons}$ that has been determined with $t_0 \leq t_{ons} \leq t_1$.

According to an embodiment, the location determiner 130 may, e.g., be configured to determine the onset time using artificial intelligence and/or machine-learning system and/or using a machine learning and/or artificial intelligence algorithm.

In an embodiment, the location determiner 130 may, e.g., be configured to determine the location such that the location is located on a circle around the position of a loudspeaker of the one or more loudspeakers, when at least one of the one or more microphones is attached to said loudspeaker, and a radius of the circle depends on the onset time and on a speed of sound. Or, according to an embodiment, when three dimensions are considered, the location is located on a sphere.

Or, in another embodiment, the location determiner 130 may, e.g., be configured to determine the location such that the location is located on an ellipse, wherein at least one of the one or more loudspeakers may, e.g., be located at a first focal point of the ellipse, wherein at least one of the one or more microphones may, e.g., be located at a second focal point of the ellipse, and wherein a size of a semi-major axis of the ellipse depends on the onset time and on the speed of sound. Or, according to an embodiment, when three dimensions are considered, the location is located on an ellipsoid.

According to an embodiment, the one or more microphones comprise at least two microphones, wherein the location determiner 130 may, e.g., be configured to determine the location such that the location may, e.g., be located at an intersection of at least two circles around the position of each of the at least two microphones, when the at least two microphones are attached to one of the one or more loudspeakers, and a radius of each of the at least two circles depends on an onset time for said one of the at least two circles and on a speed of sound. Or, according to an embodiment, when three dimensions are considered, an intersection of at least two spheres is considered.

It may be particularly advantageous to employ a setup where a microphone is arranged on a loudspeaker, in such a scenario, strong reflection paths are created, unsuitable reflection angles are avoided.

Or, in another embodiment, the one or more microphones comprise at least two microphones, wherein the location determiner 130 may, e.g., be configured to determine the location such that the location may, e.g., be located at an intersection of at least two ellipses, wherein one of the one or more loudspeakers may, e.g., be located at a first focal point of the at least two ellipses, and wherein each of the at least two microphones may, e.g., be located at a second focal point of one of the at least two ellipses, and wherein a size of a semi-major axis of each of the at least two ellipses depends on an onset time for said one of the at least two ellipses and on the speed of sound. Or, according to an embodiment, when three dimensions are considered, an intersection of at least two ellipsoids is considered.

In an embodiment, the one or more loudspeaker signals comprise at least two loudspeaker signals, and the response determiner 110 may, e.g., be configured to determine the first response information and the second response information depending on the at least two loudspeaker signals and depending on the one or more microphone signals. And/or, the one or more microphone signals comprise at least two microphone signals, and the response determiner 110 may, e.g., be configured to determine the first response information and the second response information depending on the one or more loudspeaker signals and depending on the at least two microphone signals.

According to an embodiment, the living being or the moving object, for which the location determiner 130 may, e.g., be configured to determine a location, may, e.g., be a listener being located in the environment.

In an embodiment, the apparatus may, e.g., further comprise a renderer configured for receiving one or more audio input signals and being configured to generate one or more audio output signals for being reproduced by one or more loudspeakers in the environment. The renderer may, e.g., be configured to render the one or more audio input signals to generate the one or more audio output signals depending on the location of the listener, which has been determined by the location determiner 130. The location of the living being or moving object, e.g., the location of the listener, may, e.g., be expressed as a relative position, e.g., relative to a microphone and/or relative to a loudspeaker, or as an absolute position (e.g., as a position in an Cartesian coordinate system).

E.g., the one or more loudspeakers may, e.g., be two or more loudspeakers, and the one or more loudspeaker signals may, e.g., be two or more loudspeaker signals.

For example, a location/position of the listener may, e.g., be determined according to one of the concepts provided above. Then, for example, amplitude panning may, e.g., be employed, for example, such that the loudspeaker signals are optimized for the listener position, where the listener is currently located. E.g., the levels of each of the two or more loudspeaker signals may, e.g., be adapted and/or delays may be induced such that the sound waves resulting from the loudspeaker signals arrive at the right time at the listener position with a desired loudness. Any available panning technique may, e.g., be employed.

According to an embodiment, the apparatus may, e.g., further comprise an orientation determiner configured for determining an orientation of the living being or of the moving object depending on the response difference information.

Moreover, a system according to an embodiment is provided.

The system comprises an apparatus according to one of the above-described embodiments, the one or more loudspeakers, and the one or more microphones.

In an embodiment, the one or more loudspeaker signals comprise at least two loudspeaker signals. The apparatus is configured to determine the first response information and the second response information depending on the at least two loudspeaker signals and depending on the one or more microphone signals. The one or more loudspeakers comprise at least two loudspeakers configured for reproducing the at least two loudspeaker signals; wherein the one or more microphones are configured to record the one or more microphone signals.

In another embodiment, the one or more microphone signals comprise at least two microphone signals. The apparatus is configured to determine the first response information and the second response information depending on the one or more loudspeaker signals and depending on the at least two microphone signals. The one or more loudspeakers are configured for reproducing the one or more loudspeaker signals. The one or more microphones comprise at least two microphones being configured to record the at least two microphone signals.

In the following, particular embodiments of the present invention are described.

In the following, a loudspeaker and a microphone array comprising $N$ microphones placed in a room are considered, where the loudspeaker periodically emits a signal $x(t)$ and the $i$-th microphone captures the signal $y_{i,k}(t)$ during the $k$-th repetition of the source signal.

If the source signal excites the room's spectrum well, the time-varying RIR $h_{i,k}(t)$ between the loudspeaker and the $i$-th microphone can be estimated as

$$h_{i,k}(t) = \mathscr{F}^{-1} \left\{ \frac{\mathscr{F}\{y_{i,k}(t)\}}{\mathscr{F}\{x(t)\}} \right\} \qquad (1)$$

where $\mathscr{F}\{\cdot\}$ denotes the Fourier transform. These RIRs can be decomposed into three components:

$$h_{i,k}(t) = h_{i,k}^{e}(t) + h_{i,k}^{c}(t) + n_{i,k}(t) \qquad (2)$$

where $h_{i,k}^{e}(t)$ denotes the RIR without the listener present, $h_{i,k}^{c}(t)$ represents the RIR change induced by the presence of a person and $n_{i,k}(t)$ denotes additive noise. If the time of flight of the shortest loudspeaker-listener-microphone path is denoted as $t_{ons}$, it can be observed that $h_{i,k}^{c}(t)$ remains zero for all $t < t_{ons}$. This is because the presence of the listener cannot influence $h_{i,k}(t)$ before any sound waves reflected off the listener reach the microphone. Consequently, $h_{i,k}^{c}(t)$ features a distinct onset at time $t_{ons}$, as indicated in Fig. 4, allowing for the determination the length of the shortest loudspeaker-listener-microphone path. Given that $h_{i,k}^{c}(t)$ cannot be reliably isolated from $h_{i,k}(t)$ by subtracting a previously captured empty room's IR, instead the difference between successive RIRs captured while the listener is present can be computed. This difference will be referred to as differential RIR. The underlying idea is that any listener will invariably exhibit movement, albeit minimal due to, for example, breathing or cardiac activity, while other elements in the room only undergo very gradual changes over time. As a consequence, the empty room's IR will remain close to unchanged and cancel out when computing the differential RIR $h_{i,k}^{(m)}(t)$ for a small integer $m$: If two RIRs are captured within a short time frame, the empty room's IR will remain close to unchanged and cancel out when computing the differential RIR $h_{i,k}^{(m)}(t)$ for a small integer $m$:

$$h_{i,k}^{(m)}(t) = h_{i,k}(t) - h_{i,k+m}(t) \approx$$

$$\approx h_{i,k}^{c}(t) - h_{i,k+m}^{c}(t) + n_{i,k}(t) - n_{i,k+m}(t)$$

(3)

Given that $h_{i,k}^{c}(t)$ and $h_{i,k+m}^{c}(t)$ exhibit distinct onsets, only subtle differences between these signals, such as a single sample delay, are required to produce a similar onset in $h_{i,k}^{(m)}(t)$, provided that the signal-to-noise ratio is sufficient. To achieve a one-sample delay of the loudspeaker-(listener-)microphone path (e.g., the shortest reflection path from the loudspeaker, via the listener, to the microphone array), the listener needs to move approximately $\frac{343\,\mathrm{m/s}}{2 \cdot 48\,\mathrm{kHz}} \approx 3.6\,\mathrm{mm}$ away from the sound source or microphone, assuming a sampling rate of 48 kHz and a speed of sound of 343 m/s. Therefore, even minimal movement is sufficient to produce an onset in the differential RIR. Therefore, even minimal movement is sufficient to produce a signal with the characteristics shown in Fig.4. It should be noted that the detection of higher-order reflections within a differential RIR may also be of importance.

To enhance the signal-to-noise ratio of the differential RIR, delay-and-sum beamforming can be employed, followed by computing the maximum time-dependent power with respect to the look direction $\varphi$:

$$Y_{k}^{(m)}(t, \varphi) = \frac{1}{N} \cdot \sum_{i=0}^{N-1} h_{i,k}^{(m)}(t - \tau_i(\varphi))$$

(4)

$$\hat{P}_{k}^{(m)}(t) = \max_{\varphi}\{|Y_{k}^{(m)}(t, \varphi)|^2\}$$

(5)

Here, $\tau_i(\varphi)$ denotes the $\varphi$-dependent time-lag of the $i$-th microphone relative to the center of the microphone array. By normalizing $\hat{P}_{k}^{(m)}(t)$ between 0 and 1, $t_{\mathrm{ons}}$ can be determined as the first time instance where $\hat{P}_{k}^{(m)}(t)$ surpasses a given amplitude threshold. Empirically, this threshold may, for example, be set to 0.2, as an example. Given the speed of sound, $t_{ons}$ can subsequently be mapped to an ellipse of possible listener locations, where the ellipse's foci (focal points) are the locations of the loudspeaker and the microphone.

Given the speed of sound, $t_{ons}$ can subsequently be mapped to an ellipse of possible listener locations, where the ellipse's focal points (focal points may, e.g., also be referred to as foci) are the locations of the loudspeaker and the microphone.

Explaining this aspect: In an embodiment, if the loudspeaker and the microphone are located at (roughly) the same point, then sound waves reflected at a living being or moving object return to the microphone at onset time $t_{ons}$, and it can be assumed that they have reached the living being or moving object at time $0.5\,t_{ons}$. Assuming c to be the speed of sound, the distance: $0.5\,t_{ons} \cdot c$ may, e.g., define the radius of a circle on which the living being or moving object is located (with the joint loudspeaker/microphone position being located at the center of the circle, and with $c$ being the speed of sound).

If, however the loudspeaker and the microphone are located at different positions then an ellipse defines all possible locations where the living being or moving object may, e.g., be located, with the loudspeaker being located at the first focal point and the microphone being located at the second point of such an ellipse, because a path from the first focal point via a first straight line to a point on the ellipse and from the said point on the ellipse to the second focal point via a second straight line is the same for all points on the ellipse. In an embodiment, the length of that path along the first straight line and along the second straight line may, e.g., be determined to be $t_{ons} \cdot c$, with $c$ being the speed of sound.

To determine the precise listener location, the angle $\hat{\varphi}$ of the listener relative to the microphone array can be computed using the steered response power as

$$\hat{\varphi} = \underset{\varphi}{\mathrm{argmax}} \int_{t_0}^{t_1} P_k^{(m)}(t, \varphi)\, dt$$

$$(6)$$

where $t_0 \le t_{ons} \le t_1$ are chosen such that the integral exclusively encompasses first order reflections.

Empirically, these values may, e.g., be tuned to $t_0 = t_{ons} - 10$ and $t_1 = t_{ons} + 30$.

Since the estimate of $t_{ons}$ is imprecise resulting from amplitude thresholding, $t_{ons}$ can be refined after the estimation of $\hat{\varphi}$:

$$\hat{t}_{\mathrm{ons}} = \underset{t}{\mathrm{argmax}}\{P_k^{(m)}(t, \hat{\varphi})\} \quad \text{subject to} \quad t_0 \le t \le t_1$$

$$(7)$$

The estimate $\hat{t}_{ons}$ can now be utilized to define a more accurate ellipse of possible listener locations, with $\hat{\varphi}$ determining a specific point on the ellipse as the final location estimate.

According to another embodiment, to determine the location of the living being or moving object, an angle does not have to be determined. In contrast, it is sufficient to determine, e.g., three different circles or, e.g., three different ellipses on which the living being or moving object is located.

For example, if e.g., three or more microphones are employed with are located at three (e.g., slightly) different positions, three different circles (if the microphones are located at the same positions as the loudspeakers) or three different ellipses result (if the microphone positions differ from the location(s) of the one or more loudspeakers result from the determined onset. In such an embodiment, the point where all circles or all ellipses intersect defines the location of the living being or of the moving object.

In other embodiments, it may be even sufficient to determine the intersections of two different circles or two different ellipses, e.g., if one of the determined intersection points can be excluded, because some of the possible locations can be excluded. For example, if it is known that a listener is located inside a room, locations outside of the room can be excluded.

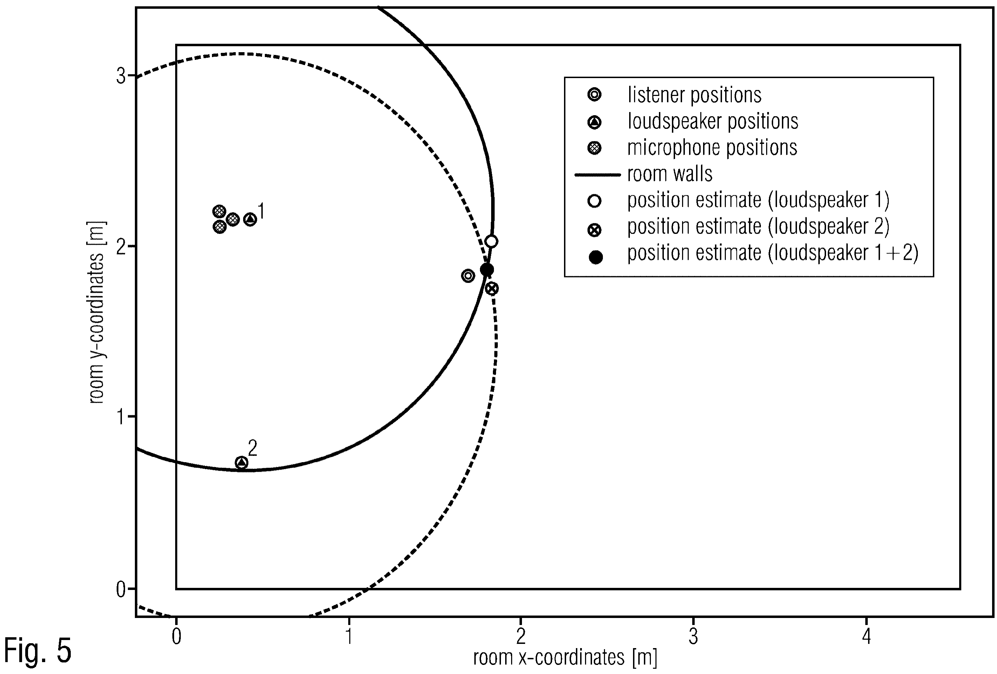

Fig. 5 illustrates two ellipses and one of their intersection points according to an embodiment.

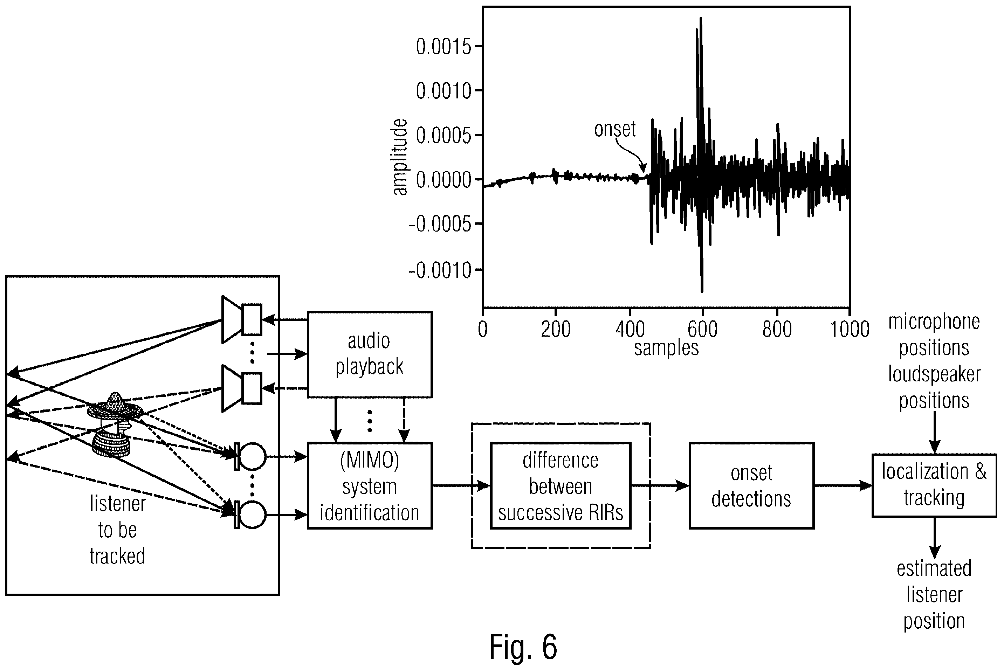

Fig. 6 illustrates an embodiment, where audio signals are reproduced. A MIMO system/apparatus allows to detect an onset in the differences between successive impulse responses or successive transfer functions. Using the detected onset, localization is conducted.

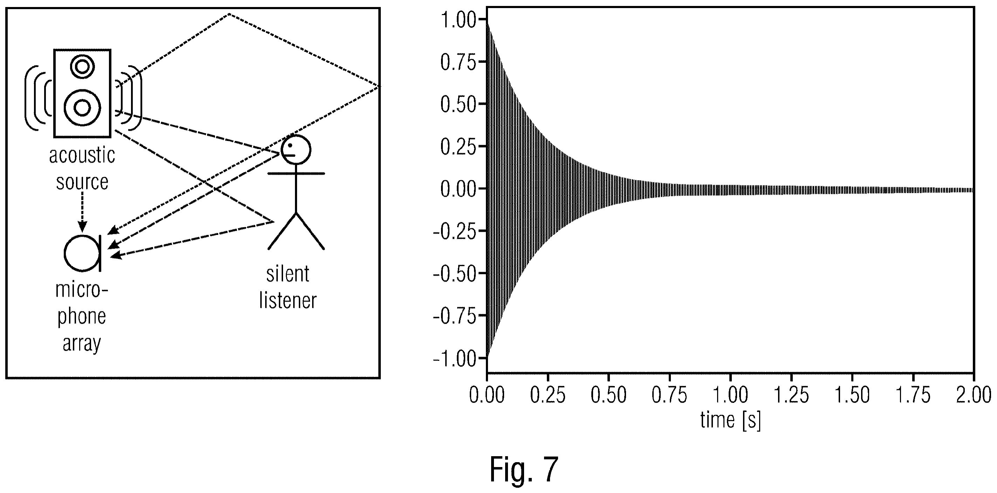

Fig. 7 illustrates an exemplary impulse response determined by an apparatus according to an embodiment.

Advantages of the proposed concepts are that no training data is needed, that No $h_{\mathrm{empty}}$ RIR is needed, that the concept is robust to changes in environmental conditions (humidity, room temperature, ...), and that no explicit system calibration (time-consuming, cumbersome) necessary.

Knowledge of loudspeaker and microphone positions (which could be estimated) may, e.g., be employed. In embodiments, accuracy may, e.g., be improved using multiple speakers (e.g., surround setups). In some embodiments, the above concept, may, e.g., be employed within existing smart speaker devices which contain microphones. Thus, object localization without additional hardware and without intrusive cameras may, e.g., be realized. The above concepts may, e.g., be employed with any kind of different loudspeaker signals.

According to another aspect of some embodiments, an orientation of the living being, e.g., of a listener (for example, a listener's pose) or of the moving object may, e.g., be determined depending on the response difference information:

The sound reflection of the listener will feature different characteristics depending on the rotation of the listener relative to the loudspeaker and the microphone array. For example, when the listener's body faces the microphone array and loudspeaker, a greater amount of energy will be reflected over a larger surface area compared to when the listener's shoulder is oriented towards the microphone array and loudspeaker. Therefore, by analysing the width of the area over which the energy (e.g. of continuous estimates from the same microphone array) is reflected, the listener's rotation could be estimated. Since the location estimates provide us with the length of the shortest line of sight path from a given loudspeaker, via the listener, to a given microphone array, spatially distributed microphones and/or loudspeakers will additionally produce slightly different location estimates based on which part of the body is closest to the given loudspeaker and microphone array, which allow for a more precise estimate. Therefore, by analysing the estimation points of spatially distributed microphone arrays over time, point clouds can be estimated, whose shape correlates with the rotation of the listener's body. For instance, if two loudspeaker-microphone pairs are arranged at opposite sides in a room, and the listener stands such that the left and right shoulders face each array, the estimated points of both microphone arrays will be farther apart compared to when the listener stands with their belly and back facing the arrays. The rotation estimates could be further refined using, e.g., an initial calibration phase, during which the average width, height, and depth of the listener's body are measured. Utilizing these principles, along with data-driven approaches, it may also be possible to estimate the listener's pose.

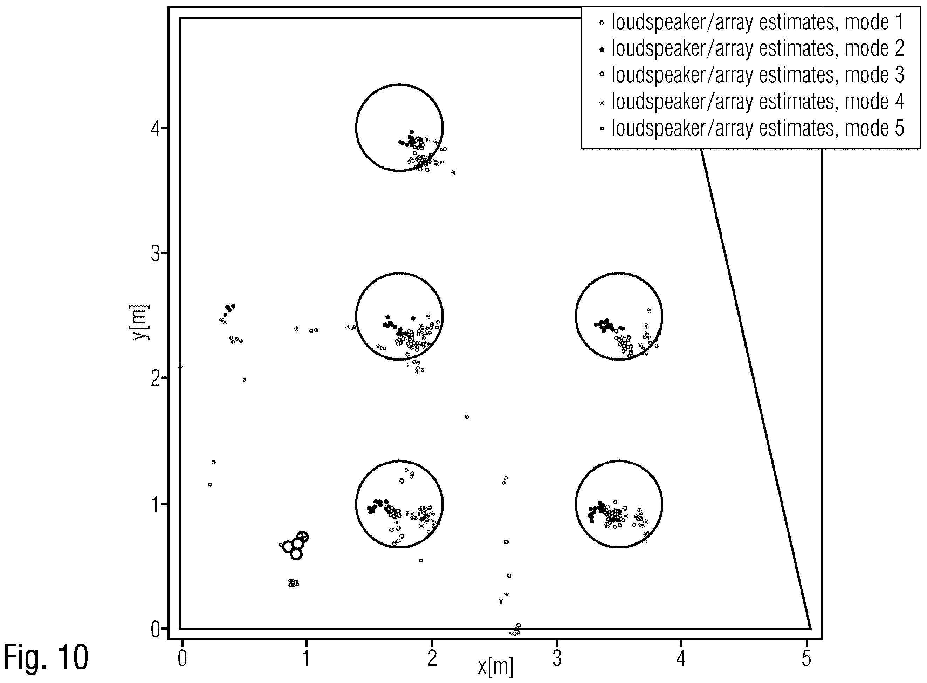

Fig. 10 illustrates an example of location determination results of one loudspeaker-microphone array system for a room A (living room), wherein the different results allow to determine a pose of a listener, wherein the different results allow to determine a mode/pose of a listener. In Fig. 10, listeners at five different locations are analysed, while the listeners change their orientation/mode/pose at their positions (mode 1, mode 2, mode 3, mode 4, mode 5).

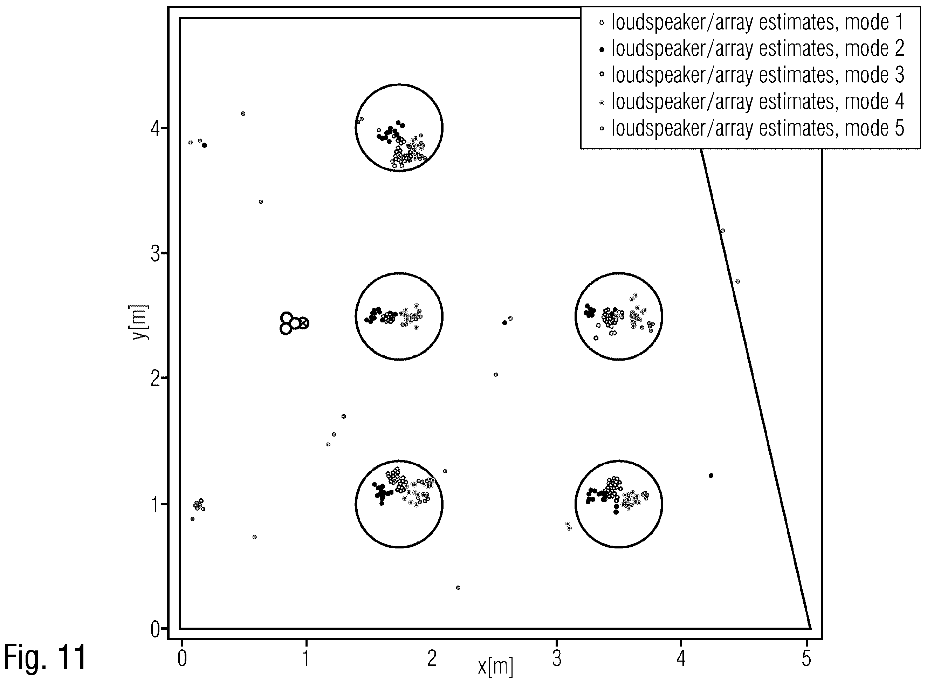

Similarly, Fig. 11 illustrates another example of location determination results of another loudspeaker-microphone array system for the room A (living room), wherein the different results allow to determine a pose of a listener.

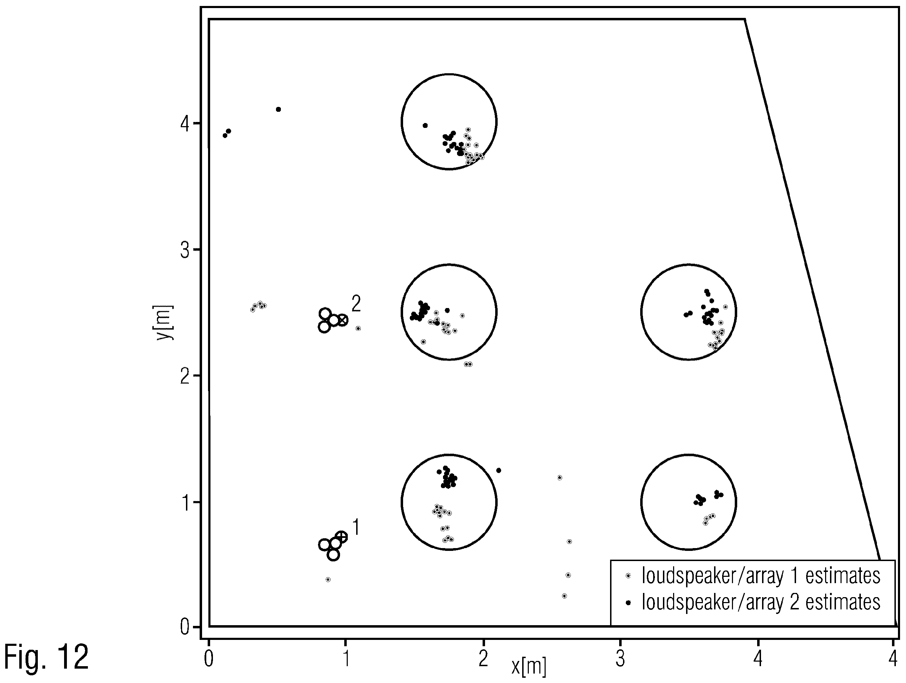

Fig. 12 illustrates examples of location determination results of two loudspeaker-microphone array systems for the room A (living room). In each of the five black circles, a plurality of location determinations of a particular listener which exhibits a particular orientation are depicted. The red dots indicate a plurality of measurements of loudspeaker-microphone array system 1. The blue dots indicate a plurality of measurements of loudspeaker-microphone array system 2. The differences in the estimations originate from that loudspeaker-microphone array system 1 receives reflections from a first body part (e.g. a first shoulder, and/or e.g. a left side of the body, and/or e.g. the belly) of the listener, while loudspeaker-microphone array system 2 receives reflections from an opposing body part (e.g. the other shoulder, and/or e.g. a right side of the body, and/or e.g. the back) of the listener. From that the mode/pose/orientation of the listener can be derived.

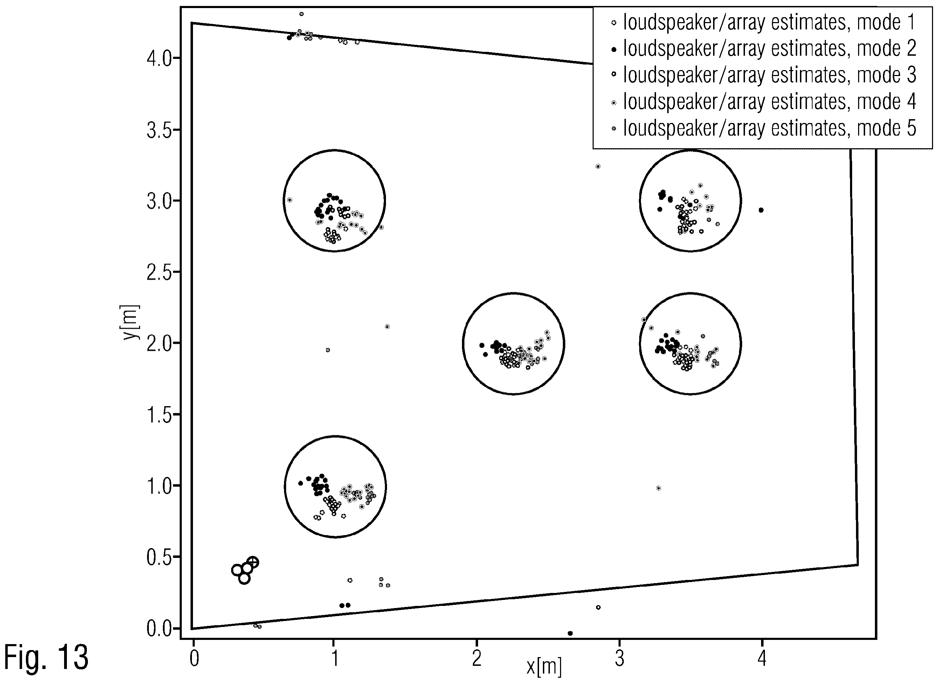

Fig. 13 illustrates an example of location determination results of one loudspeaker-microphone array system for a room B (empty space), wherein the different results allow to determine a pose of a listener.

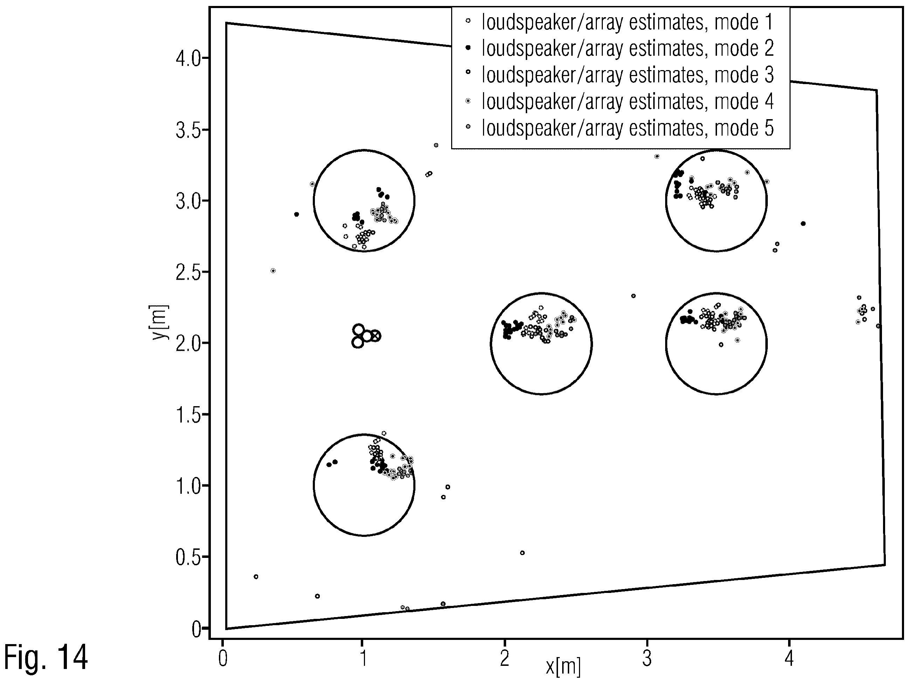

Fig. 14 illustrates another example of location determination results of another loudspeaker-microphone array system for the room B (empty space), wherein the different results allow to determine a pose of a listener.

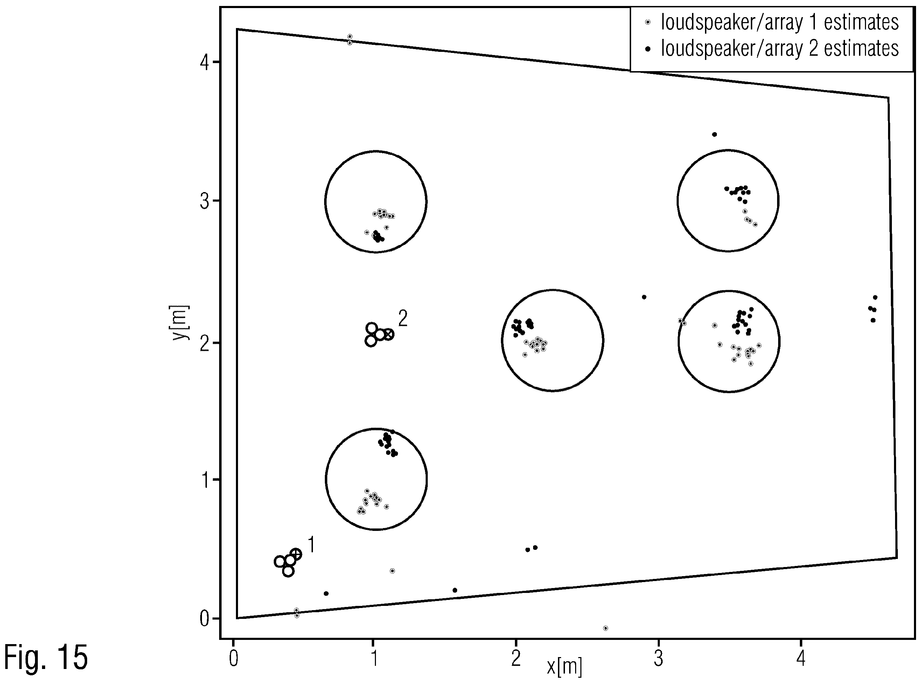

Fig. 15 illustrates examples of location determination results of two loudspeaker-microphone array systems for the room B (empty space).

Application fields may, e.g., be position-dependent rendering / tracked rendering, see, e.g., the system described above. In embodiments, a tracking of a listener position (e.g., in a living room) may, e.g., be conducted to optimize a sound field (e.g., for tracked rendering, for example, in MPEG-I).

In an embodiment, pose tracking (e.g., laying on a sofa vs. sitting on sofa) may, e.g., be conducted; hands-free communication, e.g., in an apartment and/or assisted living may, e.g., be supported. An embodiment may, e.g., be employed for non-intrusive surveillance and/or for occupancy monitoring, and/or for echo cancelling, and/or for voice quality enhancement.

Some embodiments may, e.g., be combined into a hybrid localization system. For example, a localization of a speaker on a hands-free call during speech pauses and speech may, e.g., be conducted. In an embodiment, VAD (Voice Activity Detection) may, e.g., be employed as a classifier between active and passive localization mode. Some embodiments may, e.g., be realized by employing a sound bar.

Some embodiments realize a better capturing of a speech onset of speakers that moved silently.

In some embodiments, improvements in an audio playback system (e.g., a soundbar) calibration are achieved. In some embodiments, it becomes possible to find people in a room, and/or to find spots where people are usually located.

In an embodiment, room boundary detection is conducted by determining a position of a human being walking along the walls.

Some embodiments realize a tracking system using inaudible frequency (e.g., in the range 18-24 kHz) which can be produced by non-ultrasound devices.

Some embodiments realize a tracking system using signals that are inaudibly embedded into the audible sound.

Some embodiments localize a listener during a specifically initiated sequence, or as part of a room correction or room calibration procedure.

In the following, a result of an experimental validation is provided.

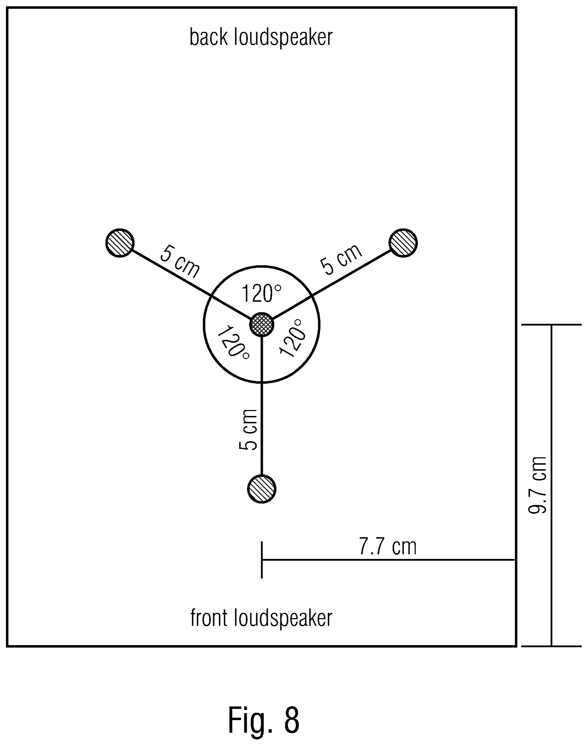

To capture the RIRs, two Neumann KH80 DSP loudspeakers have been employed, each equipped with three AKG C417 PP microphones mounted on top as shown in Fig. 8. In particular, Fig. 8 illustrates a top view of the loudspeaker with upwards-facing microphones (marked by three circles, each being 5 cm apart from the center). The array center (red) is positioned at the loudspeaker's center. The 6-channel RIRs are estimated using 20 Hz-24 kHz sine sweeps of 1 s (Short) and 5 s (Long) duration with an added 1 s of silence, all captured at a sampling rate of 48 kHz. Each loudspeaker plays four consecutive short sine sweeps and subsequently four long sine sweeps, resulting in 6 (channels) x 16 (sweeps) = 96 RIRs being captured per recording.

The acoustic centers of the loudspeakers are placed at a height of 1.13m in the bottom left corner and in the middle of the left wall of two non-rectangular rooms A and B: Room A resembles a typical living room and room B an unfurnished space. Important room and recording parameters are given in Tab. 1.

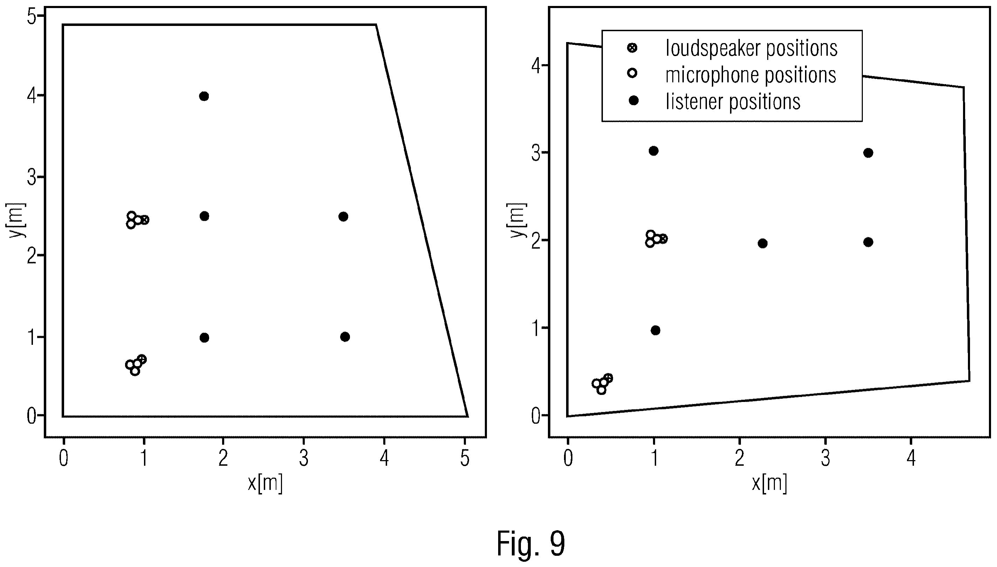

Fig. 9 illustrates a Room A (left) and Room B (right). As illustrated in Fig. 9, five positions are marked on the floor of each room, where three silent listeners are situated one at a time with one of five different modes:

1. Standing while moving and facing the left wall

2. Standing still facing the left wall
3. Standing still facing the bottom wall
4. Sitting while moving and facing the left wall
5. Sitting still facing the left wall

The total number of RIRs captured is therefore: 96 (recordings) x 2 (rooms) x 5 (positions) x 3 (participants) x 5 (modes) = 14400 RIRs. As an additional measurement, as evidence to show that the listener's micro motions are detected, a rigid standing life-sized mannequin (instead of a listener) has been placed at each of the five locations, resulting in an additional 96 (recordings) x 2 (rooms) x 5 (positions) = 960 RIRs.

(Table 1)

|  | Room A | Room B |
|---|---|---|
| RT60 | 0.38 s | 0.62 s |
| Temperature | 28 °C | 22 °C |
| Speed of Sound | 347.87 m/s | 344.38 m/s |
| Baseline Noise Level | 46 dB | 44 dB |
| Recording Level at 1m | 92 dB | 80 dB |

Table 1 illustrates important room parameters. Levels are Z-weighted.

Based on empirical observations, a threshold value of 0.2 is selected to determine $t_{ons}$, and the parameters $t_0$ and $t_1$ from equations 6 and 7 are chosen such that $t_0 - t_{ons} = -10$ and $t_1 - t_{ons} = 30$. Furthermore, all computed RIRs are truncated to a length of 1800 samples, corresponding to a maximum distance from the loudspeaker to the microphone, via the listener, of approximately 6.43m. Finally, the speed of sound $c$ in the rooms is estimated according to the formula

$$c = 331.3 \cdot \sqrt{1 + \frac{T}{273.15}} °\text{C},$$

where $T$ is the room temperature in degrees Celsius.

Given that two loudspeakers and two microphone arrays are being used, four distinct loudspeaker-microphone paths can be evaluated. The bottom left loudspeaker and microphone array are denoted as $s_1$ and $m_1$, respectively, and the remaining ones as $s2$ and $m2$. Since each sweep is repeated four times,

$$\hat{P}_0^{(1)}(t), \; \hat{P}_0^{(2)}(t), \; \hat{P}_0^{(3)}(t), \; \hat{P}_1^{(2)}(t), \; \hat{P}_1^{(3)}(t) \text{ and } \hat{P}_2^{(3)}(t)$$

have been computed for each of the four loudspeaker-microphone paths and the two sweep lengths. Subsequently the point estimates for each differential RIR according to the algorithm described above have been computed.

To obtain the estimation accuracy, the mean error has not been calculated, as incorrect angle estimates result in significantly erroneous results, which would produce misleading conclusions. Additionally, the reflections from the listener are not concentrated at a single point, but rather distributed over a small area. Therefore, the accuracy of $\hat{t}_{ons}$ estimates is shown by classifying those onset estimates as successful if they fall within 100 samples of the ground truth value. Additionally, the point estimates have been classified as successful which fall within a circle of 35 cm radius around the listener positions. The localization accuracy for $\hat{\varphi}$ has not been included, since incorrect detection of $\hat{t}_{ons}$ results in incorrect angle estimates. The angle estimation accuracy is therefore reflected by the point estimation accuracy.

| Positions | | 1 | 2 | 3 | 4 | 5 |
|---|---|---|---|---|---|---|
| A Short | $s_1$-$m_1$ | **89, 86** | 70, 59 | 89, 68 | 76, 73 | 74, 73 |
| | $s_2$-$m_2$ | 85, 83 | **84, 78** | **90, 86** | **83, 83** | **78, 76** |
| | $s_1$-$m_2$ | 85, 84 | 65, 63 | 76, 67 | 59, 59 | 38, 38 |
| | $s_2$-$m_1$ | 86, 82 | 75, 61 | 90, 84 | 72, 70 | 76, 74 |
| A Long | $s_1$-$m_1$ | **90, 89** | 68, 55 | 90, 74 | 68, 64 | 54, 52 |
| | $s_2$-$m_2$ | 87, 80 | **83, 73** | **90, 88** | **82, 82** | 74, 73 |
| | $s_1$-$m_2$ | 74, 74 | 59, 58 | 78, 74 | 51, 51 | 35, 35 |
| | $s_2$-$m_1$ | 87, 83 | 69, 59 | 90, 85 | 73, 73 | **78, 76** |
| B Short | $s_1$-$m_1$ | **90, 84** | 73, 62 | 88, 85 | 77, 70 | 75, 57 |
| | $s_2$-$m_2$ | 79, 74 | **77, 74** | **90, 85** | **82, 82** | **79, 77** |
| | $s_1$-$m_2$ | 87, 47 | 26, 24 | 42, 42 | 19, 18 | 12, 11 |
| | $s_2$-$m_1$ | 26, 15 | 57, 45 | 87, 84 | 78, 70 | 74, 68 |
| B Long | $s_1$-$m_1$ | **90, 79** | 75, 61 | 79, 75 | 60, 51 | 67, 50 |
| | $s_2$-$m_2$ | 69, 67 | 73, **71** | 89, 82 | **82, 82** | **78, 78** |
| | $s_1$-$m_2$ | 84, 51 | 21, 18 | 39, 38 | 16, 16 | 4, 4 |
| | $s_2$-$m_1$ | 31, 16 | 49, 34 | 84, **83** | 71, 68 | 77, 73 |

(Table 2)

Table 2 illustrates Listener-position and loudspeaker-microphone path dependent results, including all modes and participants. The first and the last values represent the number of successful onset and position estimates, respectively, out of a maximum of 90. The best results are highlighted in bold.

| Modes | | 1 | 2 | 3 | 4 | 5 |
|---|---|---|---|---|---|---|
| A Short | $s_1$-$m_1$ | 88, 85 | **90, 86** | **90, 85** | 81, 66 | 49, 37 |
| | $s_2$-$m_2$ | **90, 89** | 89, 88 | 85, 85 | **89, 86** | **67, 58** |
| | $s_1$-$m_2$ | 85, 84 | 72, 71 | 77, 71 | 58, 57 | 31, 28 |
| | $s_2$-$m_1$ | **90, 85** | 86, 81 | 86, 81 | 81, 74 | 56, 50 |
| A Long | $s_1$-$m_1$ | 88, 83 | **89, 87** | 80, 77 | 64, 59 | 49, 28 |
| | $s_2$-$m_2$ | **90, 90** | 87, 83 | **89, 87** | **87, 84** | **63, 52** |
| | $s_1$-$m_2$ | 79, 79 | 72, 72 | 72, 68 | 46, 46 | 28, 27 |
| | $s_2$-$m_1$ | 89, 86 | 87, 84 | 84, 78 | 85, 80 | 52, 48 |
| B Short | $s_1$-$m_1$ | 87, 82 | **86, 81** | 87, 80 | **84, 74** | 59, 41 |
| | $s_2$-$m_2$ | **89, 86** | 73, 70 | 85, **83** | 83, 78 | **77, 75** |
| | $s_1$-$m_2$ | 56, 55 | 36, 30 | 37, 25 | 31, 21 | 26, 11 |
| | $s_2$-$m_1$ | 83, 77 | 60, 56 | 65, 58 | 70, 53 | 44, 38 |
| B Long | $s_1$-$m_1$ | **89, 80** | 83, 75 | 84, 72 | 70, 58 | 45, 31 |
| | $s_2$-$m_2$ | 79, 79 | **85, 83** | **85, 83** | **87, 85** | **55, 50** |
| | $s_1$-$m_2$ | 40, 39 | 37, 32 | 41, 31 | 27, 18 | 19, 7 |
| | $s_2$-$m_1$ | 75, 62 | 61, 54 | 61, 57 | 77, 67 | 38, 34 |

(Table 3)

Table 3 illustrates listener-mode and loudspeaker-microphone path dependent results, including all positions and participants. The first and the last values represent the number of successful onset and position estimates, respectively, out of a maximum of 90. The best results are highlighted in bold.

Results indicate that subtle movements are sufficient to localize a sitting listener within 35 cm accuracy 82.5% and a standing listener 92.8% of the time.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit.

In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[1] Christine Evers, Heinrich W Löllmann, Heinrich Mellmann, Alexander Schmidt, Hendrik Barfuss, Patrick A Naylor, and Walter Kellermann, "The locata challenge: Acoustic source localization and tracking," IEEE/ACM Transactions on Audio, Speech, and Language Processing, vol. 28, pp. 1620-1643, 2020.

[2] Soumitro Chakrabarty and Emanu¨el A. P. Habets, "Multi-speaker doa estimation using deep convolutional networks trained with noise signals," IEEE Journal of Se-lected Topics in Signal Processing, vol. 13, no. 1, pp. 8-21, 2019.

[3] Zhijian Yang, Xiaoran Fan, Volkan Isler, and Hyun Soo Park, "Posekernellifter: Metric lifting of 3d human pose using sound," in 2022 IEEE/CVF Conference on Computer Vision and Pattern Recognition (CVPR), 2022, pp.

13169-13179.

[4] Kihyun Kim, Semyung Wang, Homin Ryu, and Sung Q. Lee, "Acoustic-based position estimation of an object and a person using active localization and sound field analysis," Applied Sciences, vol. 10, no. 24, 2020.

[5] Mason Wang, Samuel Clarke, Jui-Hsien Wang, Ruohan Gao, and Jiajun Wu, "Soundcam: a dataset for finding humans using room acoustics," Advances in Neural Information Processing Systems, vol. 36, 2024.

**Claims**

1. An apparatus for acoustic localization of a living being or of a moving object, wherein the apparatus comprises:

   a response determiner (110) configured for determining first response information for an environment for a first point-in-time or for a first time period when the living being or the moving object is present in the environment; and configured for determining second response information for the environment for a second point-in-time or for a second time period, being different from the first point-in-time or from the first time period, when the living being or the moving object is also present in the environment;
   a response difference determiner (120) configured for determining response difference information indicating differences between the second response information and the first response information, and
   a location determiner (130) configured for determining a location of the living being or of the moving object in the environment depending on the response difference information.

2. An apparatus according to claim 1,
   wherein the response determiner (110) is configured for determining the first response information and the second response information depending on one or more loudspeaker signals reproduced by one or more loudspeakers in the environment and depending on one or more microphone signals of one or more microphones recording sound waves in the environment when the one or more loudspeaker signals are reproduced by the one or more loudspeakers.

3. An apparatus according to claim 2,

   wherein the location determiner (130) is configured to determine an onset time indicating a time of an onset depending on the response difference information,
   wherein the location determiner (130) is configured to determine the location of the living being or of the moving object depending on the onset time.

4. An apparatus according to claim 3,

   wherein the response determiner (110) is configured to determine the first response information and the second response information, such that the first response information and the second response information comprises information on two or more impulse responses or on two or more transfer functions, which depend on at least one of the one or more loudspeaker signals, and which depend on at least one of the one or more microphone signals, wherein the response difference determiner (120) is configured to determine the response difference information, such that the response difference information comprises information on two or more difference functions; wherein each of the two or more difference functions indicate a difference between one of the two or more impulse responses of the second response information and one of the two or more first impulse responses of the first response information for a same loudspeaker-microphone path of the one or more loudspeakers and of the one or more microphones, or wherein each of the two or more difference functions indicate a difference between one of the two or more transfer functions of the second response information and one of the two or more transfer functions of the first response information for a same loudspeaker-microphone path of the one or more loudspeakers and of the one or more microphones.

5. An apparatus according to claim 4,
   wherein the location determiner (130) is configured to determine the onset time

   by determining, for each time instance of a plurality of time instances, a power value or an energy value or a magnitude value or an amplitude value for each of a plurality of directions, depending on the two or more difference functions,

by choosing for said time instance a maximum power or a maximum energy or a maximum magnitude or a maximum amplitude among the plurality of directions, and
by choosing one of the plurality of time instances as the onset time having a maximum power or maximum energy or maximum magnitude or maximum amplitude being greater than a threshold value.

6. An apparatus according to claim 5,
wherein the location determiner (130) is configured to determine the power value or the energy value for each of the plurality of directions for each of the plurality of time instances using beamforming.

7. An apparatus according to claim 6,

wherein the location determiner (130) is configured to determine the power value or the energy value for each of the plurality of directions for each of the plurality of time instances using delay-and-sum beamforming or using filter-and-sum beamforming, or
wherein the location determiner (130) is configured to determine the location of the living being or of the moving object using a steered-response power algorithm.

8. An apparatus according to one of claims 5 to 7,

wherein the one or more microphones comprise at least two microphones,
wherein the apparatus is configured to determine the maximum power for each of the plurality of time instances depending on

$$P(t, \varphi) = \left| \frac{1}{N} \cdot \sum_{i=0}^{N-1} h_i(t - \tau_i(\varphi)) \right|^2$$

$$\hat{P}(t) = \max_{\varphi} P(t, \varphi)$$

or depending on

$$P(t, \varphi) = \left| \frac{1}{N} \cdot \sum_{i=0}^{N-1} w_i(t) \cdot h_i(t - \tau_i(\varphi)) \right|^2$$

$$\hat{P}(t) = \max_{\varphi} P(t, \varphi)$$

or wherein the apparatus is configured to determine a maximum value for each of the plurality of time instances depending on

$$Y(t, \varphi) = \frac{1}{N} \cdot \sum_{i=0}^{N-1} h_i(t - \tau_i(\varphi))$$

$$\hat{Y}(t) = \max_{\varphi} \{ |Y(t, \varphi)|^n \}$$

or depending on

$$Y(t, \varphi) = \frac{1}{N} \cdot \sum_{i=0}^{N-1} w_i(t) \cdot h_i(t - \tau_i(\varphi))$$

$$\hat{Y}(t) = \max_{\varphi}\{|Y(t, \varphi)|^n\}$$

wherein $t$ indicates one of the plurality of time instances,
wherein $\varphi$ is an angle indicating one of the plurality of directions,
wherein $\tau_i(\varphi)$ indicates a $\varphi$-dependent time lag for an i-th microphone of the at least two microphones,
wherein $N$ indicates a number of the at least two microphones,
wherein $h_i$ indicates a differential impulse response for the i-th microphone,
wherein $w_i(t)$ indicates a weight for time instance $t$ for the i-th microphone,
wherein $P(t, \varphi)$ indicates the power value for $\varphi$ for a time instance $t$,
wherein $\hat{P}(t)$ indicates the maximum power for the time instance $t$ among the plurality of directions,
wherein $Y(t, \varphi)$ indicates a result of the filter-and-sum beamforming or of the delay-and-sum beamforming for $\varphi$ for a time instance $t$,
wherein $\hat{Y}(t)$ indicates the maximum value for the time instance $t$ among the plurality of directions,
wherein $n$ indicates a real number.

9. An apparatus according to one of claims 5 to 8,
wherein the location determiner (130) is configured to determine a direction from the at least one of the one or more microphones to the location of the living being or of the moving object depending on that direction of the plurality of directions for which the power value or the energy value or the magnitude value or the amplitude value is the maximum power or is the maximum energy or is the maximum magnitude or is the maximum amplitude.

10. An apparatus according to one of claims 5 to 9,

wherein the location determiner (130) is configured to determine a direction $\hat{\varphi}$ from the at least one of the one or more microphones to the location of the living being or of the moving object depending on

$$\hat{\varphi} = \operatorname*{argmax}_{\varphi} \int_{t0}^{t1} P(t, \varphi)\, dt$$

wherein $P(t, \varphi)$ indicates the power value for $\varphi$ for a time instance $t$,
wherein $t_0$ and $t_1$ are chosen such that they define an interval of predefined size around the onset time $t_{ons}$ that has been determined with $t_0 \le t_{ons} \le t_1$ ; or
wherein the location determiner (130) is configured to determine a direction $\hat{\varphi}$ from the at least one of the one or more microphones to the location of the living being or of the moving object depending on

$$\hat{\varphi} = \operatorname*{argmax}_{\varphi} \int_{t_0}^{t_1} |Y(t, \varphi)|^2\, dt$$

wherein $Y(t, \varphi)$ indicates a result value of a beamforming algorithm or of a steered-response power algorithm for $\varphi$ for a time instance $t$,
wherein $t_0$ and $t_1$ are chosen such that they define an interval of predefined size around the onset time $t_{ons}$ that has been determined with $t_0 \le t_{ons} \le t_1$.

11. An apparatus according to one of claims 5 to 10,

wherein, to obtain a refinement $\hat{t}_{ons}$ of the onset time, the location determiner (130) is configured to refine the onset time that has been determined depending on

$$\hat{t}_{ons} = \underset{t}{\mathrm{argmax}}\{P(t,\hat{\varphi})\} \quad subject\ to\ \ t_0 \le t \le t_1$$

wherein $P(t, \hat{\varphi})$ indicates the power value for $\hat{\varphi}$ for a time instance $t$,
wherein $t_0$ and $t_1$ are chosen such that they define an interval of predefined size around the onset time $t_{ons}$ that has been determined with $t_0 \le t_{ons} \le t_1$ ; or
wherein, to obtain a refinement $\hat{t}_{ons}$ of the onset time, the location determiner (130) is configured to refine the onset time that has been determined depending on

$$\hat{t}_{ons} = \underset{t}{\mathrm{argmax}}\{|Y(t,\hat{\varphi})|\} \quad subject\ to\ \ t_0 \le t \le t_1$$

wherein $Y(t, \hat{\varphi})$ indicates a result value of a beamforming algorithm or of a steered-response power algorithm for $\varphi$ for a time instance $t$,
wherein $t_0$ and $t_1$ are chosen such that they define an interval of predefined size around the onset time $t_{ons}$ that has been determined with $t_0 \le t_{ons} \le t_1$.

**12.** An apparatus according to one of claims 3 to 6,
wherein the location determiner (130) is configured to determine the onset time using artificial intelligence and/or machine-learning system and/or using a machine learning and/or artificial intelligence algorithm.

**13.** An apparatus according to one of claims 3 to 9 or according to claim 12,

wherein the location determiner (130) is configured to determine the location such that the location is located on a circle or sphere around the position of a loudspeaker of the one or more loudspeakers, when at least one of the one or more microphones is attached to said loudspeaker, and a radius of the circle or of the sphere depends on the onset time and on a speed of sound, or
wherein the location determiner (130) is configured to determine the location such that the location is located on an ellipse or ellipsoid, wherein at least one of the one or more loudspeakers is located at a first focal point of the ellipse or ellipsoid, wherein at least one of the one or more microphones is located at a second focal point of the ellipse or ellipsoid, and wherein a size of a semi-major axis of the ellipse or ellipsoid depends on the onset time and on the speed of sound.

**14.** An apparatus according to one of claims 3 to 9 or according to claim 12,

wherein the one or more microphones comprise at least two microphones, wherein the location determiner (130) is configured to determine the location such that the location is located at an intersection of at least two circles or of at least two spheres around the position of each of the at least two microphones, when the at least two microphones are attached to one of the one or more loudspeakers, and a radius of each of the at least two circles or of the at least two spheres depends on an onset time for said one of the at least two circles or of the at least two spheres and on a speed of sound, or
wherein the one or more microphones comprise at least two microphones, wherein the location determiner (130) is configured to determine the location such that the location is located at an intersection of at least two ellipses or of at least two ellipsoids, wherein one of the one or more loudspeakers is located at a first focal point of the at least two ellipses or of the at least two ellipsoids, and wherein each of the at least two microphones is located at a second focal point of one of the at least two ellipses or of the at least two ellipsoids, and wherein a size of a semi-major axis of each of the at least two ellipses or of the at least two ellipsoids depends on an onset time for said one of the at least two ellipses or of the at least two ellipsoids and on the speed of sound.

**15.** An apparatus according to one of the preceding claims and depending on claim 2,

wherein the one or more loudspeaker signals comprise at least two loudspeaker signals, and the response determiner (110) is configured to determine the first response information and the second response information depending on the at least two loudspeaker signals and depending on the one or more microphone signals; and/or
wherein the one or more microphone signals comprise at least two microphone signals, and the response determiner (110) is configured to determine the first response information and the second response information depending on the one or more loudspeaker signals and depending on the at least two microphone signals.

**16.** An apparatus according to one of the preceding claims,
wherein the living being or the moving object, for which the location determiner (130) is configured to determine a location, is a listener being located in the environment.

**17.** An apparatus according to claim 16,

wherein the apparatus further comprises a renderer configured for receiving one or more audio input signals and being configured to generate one or more audio output signals for being reproduced by one or more loudspeakers in the environment,
wherein the renderer is configured to render the one or more audio input signals to generate the one or more audio output signals depending on the location of the listener, which has been determined by the location determiner (130).

**18.** An apparatus according to one of the preceding claims,
wherein the apparatus further comprises an orientation determiner configured for determining an orientation of the living being or of the moving object depending on the response difference information.

**19.** A system,

wherein the system comprises an apparatus according to one of the preceding claims and depending on claim 2, the one or more loudspeakers, and the one or more microphones,
wherein the one or more loudspeaker signals comprise at least two loudspeaker signals, wherein the apparatus is configured to determine the first response information and the second response information depending on the at least two loudspeaker signals and depending on the one or more microphone signals; wherein the one or more loudspeakers comprise at least two loudspeakers configured for reproducing the at least two loudspeaker signals; wherein the one or more microphones are configured to record the one or more microphone signals; and/or
wherein the one or more microphone signals comprise at least two microphone signals, wherein the apparatus is configured to determine the first response information and the second response information depending on the one or more loudspeaker signals and depending on the at least two microphone signals, wherein the one or more loudspeakers are configured for reproducing the one or more loudspeaker signals; wherein the one or more microphones comprise at least two microphones being configured to record the at least two microphone signals.

**20.** A method for acoustic localization of a living being or of a moving object, wherein the apparatus comprises:

determining first response information for an environment for a first point-in-time or for a first time period when the living being or the moving object is present in the environment; and configured for determining second response information for the environment for a second point-in-time or for a second time period, being different from the first point-in-time or from the first time period, when the living being or the moving object is also present in the environment;
determining response difference information indicating differences between the second response information and the first response information, and
determining a location of the living being or of the moving object in the environment depending on the response difference information.

**21.** A computer program for implementing the method of claim 20 when being executed on a computer or signal processor.

Fig. 1

Fig. 2

active

passive

acoustic source
micro-phone array

acoustic source
micro-phone array

acoustic source
micro-phone array

silent listener

Fig. 3

Fig. 4

Fig. 5

EP 4 707 863 A1

microphone positions

loudspeaker positions

localization & tracking

estimated listener position

onset detections

difference between successive RIRs

audio playback

(MIMO) system identification

listener to be tracked

amplitude

0.0015
0.0010
0.0005
0.0000
-0.0005
-0.0010

0    200    400    600    800    1000

samples

onset

Fig. 6

24

Fig. 7

EP 4 707 863 A1

**Fig. 8**

Fig. 9

EP 4 707 863 A1

Fig. 10

Fig. 11

EP 4 707 863 A1

Fig. 12

Fig. 13

Fig. 14

EP 4 707 863 A1

Fig. 15

## EUROPEAN SEARCH REPORT

Europäisches Patentamt
European Patent Office
Office européen des brevets

**Application Number**

**EP 24 19 9357**

### DOCUMENTS CONSIDERED TO BE RELEVANT

| Category | Citation of document with indication, where appropriate, of relevant passages | Relevant to claim |
|---|---|---|
| X | US 2016/154089 A1 (ALTMAN NATHAN [US]) 2 June 2016 (2016-06-02) * abstract *; figures 1-5 * * paragraph [0002] - paragraph [0011] * * paragraph [0019] - paragraph [0061] * ----- | 1-21 |
| X | US 2012/001875 A1 (LI REN [US] ET AL) 5 January 2012 (2012-01-05) * abstract *; figures 1-20 * * paragraph [0002] - paragraph [0004] * * paragraph [0029] * * paragraph [0038] - paragraph [0119] * ----- | 1-21 |

**CLASSIFICATION OF THE APPLICATION (IPC)**

INV.
G01S15/52
G01S15/87

**TECHNICAL FIELDS SEARCHED (IPC)**

G01S

The present search report has been drawn up for all claims

| Place of search | Date of completion of the search | Examiner |
|---|---|---|
| Munich | 24 February 2025 | Zaneboni, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9357

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | Publication date | Patent family member(s) | | Publication date |
|---|---|---|---|---|
| US 2016154089 A1 | 02-06-2016 | CN | 107003393 A | 01-08-2017 |
| | | EP | 3227720 A1 | 11-10-2017 |
| | | US | 2016154089 A1 | 02-06-2016 |
| | | WO | 2016089518 A1 | 09-06-2016 |
| US 2012001875 A1 | 05-01-2012 | CN | 103038725 A | 10-04-2013 |
| | | EP | 2588939 A2 | 08-05-2013 |
| | | JP | 6030184 B2 | 24-11-2016 |
| | | JP | 2013536493 A | 19-09-2013 |
| | | JP | 2015179524 A | 08-10-2015 |
| | | KR | 20130033426 A | 03-04-2013 |
| | | US | 2012001875 A1 | 05-01-2012 |
| | | WO | 2012006189 A2 | 12-01-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTINE EVERS** ; **HEINRICH W LÖLLMANN** ; **HEINRICH MELLMANN** ; **ALEXANDER SCHMIDT** ; **HENDRIK BARFUSS** ; **PATRICK A NAYLOR** ; **WALTER KELLERMANN**. The locata challenge: Acoustic source localization and tracking. *IEEE/ACM Transactions on Audio, Speech, and Language Processing*, 2020, vol. 28, 1620-1643
- **SOUMITRO CHAKRABARTY** ; **EMANU¨EL A. P. HABETS**. Multi-speaker doa estimation using deep convolutional net-works trained with noise signals. *IEEE Journal of Se-lected Topics in Signal Processing*, 2019, vol. 13 (1), 8-21
- **ZHIJIAN YANG** ; **XIAORAN FAN** ; **VOLKAN ISLER** ; **HYUN SOO PARK**. Posekernellifter: Metric lifting of 3d human pose using sound. *2022 IEEE/CVF Conference on Computer Vision and Pattern Recognition (CVPR)*, 2022, 13169-13179
- **KIHYUN KIM** ; **SEMYUNG WANG** ; **HOMIN RYU** ; **SUNG Q. LEE**. Acoustic-based position estimation of an object and a person using active localization and sound field analysis. *Applied Sciences*, 2020, vol. 10 (24)
- **MASON WANG** ; **SAMUEL CLARKE** ; **JUI-HSIEN WANG** ; **RUOHAN GAO** ; **JIAJUN WU**. Soundcam: a dataset for finding humans using room acoustics. *Advances in Neural Information Processing Systems*, 2024, vol. 36